# EUROPÄISCHE PATENTSCHRIFT

(11) **EP 3 774 498 B1**
(45) Veröffentlichungstag und Bekanntmachung des Hinweises auf die Patenterteilung: **16.07.2025**
(21) Anmeldenummer: 19715834.8
(22) Anmeldetag: 21.03.2019
(51) Int. Cl.: B62D 11/24, B66F 9/075

(54) **TRANSPORTFAHRZEUG**
TRANSPORT VEHICLE
VÉHICULE DE TRANSPORT

(30) Priorität: 28.03.2018 DE 102018107430
(43) Veröffentlichungstag der Anmeldung: 17.02.2021
(73) Patentinhaber: Hubtex Maschinenbau GmbH & Co. KG, 36041 Fulda (DE); Dimos Maschinenbau GmbH, 36100 Petersberg (DE)
(72) Erfinder: SCHÜTZ, Alfred Rudi, 36041 Fulda (DE); SCHÜTZ, Pascal Alfred, 36041 Fulda (DE); KELLER, Jürgen, 36137 Großenlüder (DE)
(74) Vertreter: Kluin Patent
(86) Internationale Anmeldenummer: PCT/EP2019/057035
(87) Internationale Veröffentlichungsnummer: WO 2019/185436

(56) Entgegenhaltungen:
- EP-A1- 3 015 415
- EP-A2- 0 982 220
- EP-A2- 2 145 812
- WO-A1-01/70556

## Beschreibung

Die Erfindung betrifft ein Transportfahrzeug mit mindestens vier Rädern, wobei ein Lenkpol durch Betätigung eines Lenksollwertgebers entlang einer - insbesondere relativ zu dem Fahrzeug unverlagerbaren - Lenkpolachse verlagert wird.

Mit dem Begriff "Lenkpol" wird im Rahmen dieser Druckschrift ein Punkt bezeichnet, auf welchen die Achsen der Räder - jedenfalls in der Ausführungsform mit genau einer ungelenken Achse - bei einer Kurvenfahrt ausgerichtet sind.

Das Fahrzeug weist mindestens eine ungelenkte Achse, die auch als ungelenkte Fahrzeugradachse bezeichnet werden kann, mit zwei Antriebsrädern auf, von denen jedes ungelenkt und mit einem eigenen elektrischen Antriebsmotor angetrieben ist. Mit dem Begriff "ungelenkte Fahrzeugradachse" wird im Rahmen dieser Druckschrift insbesondere eine Fahrzeugradachse bezeichnet, an der ungelenkte Räder angeordnet sind, bevorzugt ausschließlich.

Das Fahrzeug weist mindestens eine gelenkte Achse, die auch als gelenkte Fahrzeugradachse bezeichnet werden kann, mit mindestens zwei nicht angetriebenen, lenkbaren Lasträdern auf. Mit dem Begriff "gelenkte Fahrzeugradachse" wird im Rahmen dieser Druckschrift insbesondere eine Fahrzeugradachse bezeichnet, an der gelenkte Räder angeordnet sind, bevorzugt ausschließlich. In einer Ausführungsform sind an einer gelenkten Fahrzeugradachse genau zwei gelenkte Räder, insbesondere Lasträder, angeordnet. In einer anderen Ausführungsform sind an einer gelenkten Radachse mehr als zwei, etwa vier gelenkte Räder, insbesondere Lasträder, angeordnet.

Ein zweiachsiges Transportfahrzeug mit vier Rädern ist beispielsweise aus der WO 01/70556 A1 bekannt. Bei diesem Fahrzeug kann ein Lenkprogramm, auch "Allradlenkung" genannt, während der Fahrt auf ein zweites Lenkprogramm zur gleichsinnigen Verdrehung der Lenkpolachse aller Räder durch Betätigung des Lenksollwertgebers, auch "Diagonallenkung" genannt, gewechselt werden. Bei Betätigung des Lenksollwertgebers werden die gelenkten Räder bei der Allradlenkung so betätigt, dass sich ihre Drehachsen stets in dem Lenkpol schneiden. Hingegen werden bei der Diagonallenkung die Räder in Abhängigkeit der Betätigung des Lenksollwertgebers so gelenkt, dass die Drehachsen der Räder parallel verlaufen, mit anderen Worten: dass der Lenkpol im Unendlichen liegt. Bei einer Betätigung des Lenksollwertgebers bei gewählter Diagonallenkung führt das Fahrzeug einen Richtungswechsel durch, ohne jedoch hierbei seine Ausrichtung zu verändern, wohingegen bei gewählter Allradlenkung die Ausrichtung des Fahrzeugs der Fahrtrichtungsänderung folgt.

Um im Bedarfsfalle die Ausrichtung des Fahrzeugs relativ zu seiner Fahrtrichtung unabhängig von dem gerade gewählten Lenkprogramm ändern zu können, ist bei diesem Fahrzeug ein weiteres Steuerorgan vorgesehen, welches im Bedarfsfalle zeitgleich mit dem Lenksollwertgeber betätigt werden kann. Die Betätigung dieses zweiten Steuerorgans führt zur Korrektur der Lenkwinkel der Räder zumindest einer Achse in einer nicht dem gewählten Lenkprogramm entsprechenden Weise, und zwar etwa proportional zur Auslenkung dieses Steuerorgans, das als Joystick ausgebildet ist.

Die EP 3 015 415 A1 beansprucht ein Lenkverfahren eines Flurförderzeugs mit einer Antriebsachse und einer Lenkachse, bei dem in einem besonderen (zweiten) Kurvenfahrmodus durch entsprechendes unterschiedliches Antreiben der vorderen Antriebsräder ein engerer Kurvenradius ermöglicht wird, als er durch die Stellung der lenkbaren Hinterräder zu erwarten wäre. Auf diese Weise kann auch bei Fahrzeugen mit etwa durch eine Spurstange beschränktem Lenkeinschlag um den Preis eines höheren Reifenverschleißes eine sehr enge Kurvenfahrt erzielt werden. Offenbart ist auch ein Fahrzeug, bei dem die Geometrie der gelenkten Räder einer Achsschenkellenkung entspricht, der Lenkeinschlag jedoch nicht begrenzt ist.

Die EP 2 145 812 A2 betrifft ein Verfahren zur Lenkregelung eines Rades eines Gabelstaplers.

Die EP 0 982 220 A2 zeigt ein elektrisch betriebenes dreirädriges Fahrzeug, bei dem die Rotationsgeschwindigkeit der Antriebsräder aus dem Lenkwinkel errechnet wird. Dadurch kann insbesondere das Problem von Reibung der gelenkten Räder einer Achse vermieden werden. Um hierbei auch bei niedrigen Fahrgeschwindigkeiten eine optimale Drehperformance zu erreichen wird der Motorstrom über eine Freilaufdiode einer Zerhackerschaltung geleitet. Auch hierbei kann die Dreheffizienz für ein äußeres und ein inneres Rad verbessert werden. Eine Änderung der Drehrichtung der Antriebsräder, insbesondere eine zueinander gegenläufige Drehrichtung ist bei diesem Fahrzeug nicht vorgesehen.

Nachteilig an dem vorzitierten Stand der Technik ist, dass das Fahrzeug recht aufwendig herzustellen ist und das Lenken eines derartigen Fahrzeugs eine erhebliche Übung und auch im täglichen Betrieb eine erhebliche Konzentration erfordert, wenn unerwünschte, teilweise schwer beherrschbare Fahrsituationen vermieden werden sollen.

Der Erfindung liegt daher die Aufgabe zugrunde, ein Fahrzeug zu schaffen, welches hinsichtlich zumindest eines der genannten Nachteile verbessert ist.

Diese Aufgabe wird durch das in Anspruch 1 wiedergegebene Fahrzeug gelöst.

Erfindungsgemäß ist die elektronische Steuereinrichtung so eingerichtet, dass sie die Drehrichtung eines Antriebsmotors bei einem Lenkwinkel umkehrt, bei dem die Achsen der Lasträder auf das von diesem Motor angetriebene Antriebsrad weisen. Anders ausgedrückt ist die elektronische Steuereinrichtung so eingerichtet, dass sie die Drehrichtung eines der Antriebsmotoren umkehrt, wenn der Drehpol das Antriebsrad, das dieser Antriebsmotor antreibt, entlang der Lenkpolachse - bei einem bestimmten Lenkwinkel - passiert.

Das Transportfahrzeug ist in einer Ausführungsform zweiachsig. Es ist in einer anderen Ausführungsform, wie dies etwa von manchen Lastwägen bekannt ist, dreiachsig oder weist mehr als drei Fahrzeugradachsen auf.

In einer Ausführungsform weist das Fahrzeug genau eine ungelenkte Achse auf. In einer anderen Ausführungsform weist das Fahrzeug zwei oder mehr ungelenkte Achsen auf.

In einer Ausführungsform weist das Fahrzeug genau eine gelenkte Achse auf. In einer anderen Ausführungsform weist das Fahrzeug zwei oder mehr gelenkte Achsen auf.

Jedes Rad ist bevorzugt also entweder gelenkt oder angetrieben. Und es sind bevorzugt ausschließlich nicht angetriebene Räder gelenkt.

Jedes dieser Lasträder ist unter Zuhilfenahme des Lenksollwertgebers von einer Position, in der die Achse dieses Lastrades parallel zu einer Achse der Antriebsräder verläuft in eine Position lenkbar, in der die Achse dieses Lastrades auf einen zwischen den Antriebsrädern liegenden Lenkpol ausgerichtet ist. Durch einen derart großen Lenkbereich ist eine große Manövrierfähigkeit des Fahrzeugs bewirkbar.

Es sind also bevorzugt alle Lasträder des Fahrzeugs nicht angetrieben und weiter bevorzugt alle Antriebsräder des Fahrzeugs nicht gelenkt. Wenn die Antriebsräder ungelenkt sind, ist die Lenkpolachse relativ zum Fahrzeug nicht verlagerbar und das Fahrzeug weist - jedenfalls in der Ausführungsform mit genau einer ungelenkten Achse - lediglich genau eine Lenkpolachse auf. Die Lenkpolachse fällt in der Ausführungsform mit genau einer ungelenkten Achse mit der Achse der beiden Antriebsräder zusammen.

Das Fahrzeug weist eine Vorrichtung zur Erfassung des Lenkwinkels von mindestens einem Lastrad auf. Diese Vorrichtung kann auch als Lenkwinkelsensor bezeichnet werden.

Die Vorrichtung zur Erfassung des Lenkwinkels von mindestens einem Lastrad kann einen Winkelsensor umfassen, der an dem Lastrad angeordnet ist, sie kann also den Ist-Lenkwinkel erfassen. Da die Lage des Lenkpols bereits aus dem Lenkwinkel genau eines Lastrades bestimmbar ist, ist es grundsätzlich denkbar, dass lediglich genau eine Vorrichtung zur Erfassung des Lenkwinkels genau eines der Lasträder vorgesehen ist.

Es ist auch möglich, genau eine Vorrichtung zu Lenkwinkelerfassung vorzusehen, die die Lenkwinkel mehrerer, bevorzugt aller Lasträder erfasst oder mehrere Vorrichtungen, zur Erfassung der Lenkwinkel mehrerer, bevorzugt aller Lasträder. Die Erfassung der Lenkwinkel aller Lasträder ist insbesondere dann bevorzugt, wenn, wie in einer Ausführungsform, eine Lenkregeleinrichtung vorgesehen ist.

Die Vorrichtung zur Erfassung des Lenkwinkels von mindestens einem Lastrad kann an dem Lenksollwertgeber vorgesehen sein, sie kann also den Soll-Lenkwinkel erfassen.

Es kann sowohl der Sollwert des Lenkwinkels, als auch der Istwert erfasst werden und es kann eine Lenkregeleinrichtung vorgesehen sein, etwa in der elektronischen Steuereinrichtung, zur Annäherung des Istwerts an den Sollwert, bei Abweichung.

Es ist eine elektronische Steuereinrichtung vorgesehen, die so eingerichtet ist, dass sie die Drehzahl der Antriebsmotoren in Abhängigkeit des Lenkwinkels beeinflusst.

Die elektronische Steuereinrichtung ist zudem so eingerichtet, dass sie die Drehrichtung von mindestens einem der Antriebsmotoren in Abhängigkeit des Lenkwinkels umkehrt.

Die elektronische Steuereinrichtung ist - jedenfalls in der Ausführungsform mit genau einer ungelenkte Achse - bevorzugt so eingerichtet, dass sie bei genau einem bestimmten Lenkwinkel mindestens eines der Lasträder die Drehzahl eines der Antriebsmotoren auf null reduziert und bei einem weiteren Vergrößern des Lenkwinkels die Drehrichtung dieses Antriebsmotors umkehrt.

Die elektronische Steuereinrichtung kann bevorzugt auch als elektronisches Differenzialgetriebe bezeichnet werden. Die Stellung der Lasträder gibt den Antriebsmotoren mittels der elektronischen Steuereinrichtung also bevorzugt vor, wie schnell und in welche Richtung die Antriebsmotoren das zugehörige Rad antreiben, um ein Radieren auf dem Untergrund zumindest weitgehend zu vermeiden.

Die elektronische Steuereinrichtung weist bevorzugt einen Eingang auf, der mit der Vorrichtung zur Erfassung des Lenkwinkels von mindestens einem Lastrad wirkverbunden ist. Die elektronische Steuereinrichtung weist bevorzugt einen weiteren Eingang auf, der mit dem Geschwindigkeitssollwertgeber wirkverbunden ist.

Die elektronische Steuereinrichtung weist bevorzugt einen Ausgang auf, der mit einem der Antriebsmotoren wirkverbunden ist und sie weist weiter bevorzugt einen weiteren Ausgang auf, der vorzugweise mit einem anderen Antriebsmotor wirkverbunden ist. Die elektronische Steuereinrichtung weist bevorzugt für jeden Antriebsmotor einen eigenen Ausgang auf.

Ein Fahrzeug mit einer derartigen Steuereinrichtung kann grundsätzlich, etwa wenn es - anders als das erfindungsgemäße Fahrzeug - allradgelenkt ist, auch eine Verschiebung und/oder Verdrehung der Lenkpolachse ermöglichen und dann als außerordentlich manövrierfähiges Zwei- oder Mehrwegefahrzeug ausgebildet sein. Dagegen ist eine Verschiebung und/oder Verdrehung der Lenkpolachse bei dem erfindungsgemäßen Fahrzeug aufgrund der ungelenkten Antriebsräder ausgeschlossen. Überraschenderweise hat sich gezeigt, dass die erfindungsgemäße Kombination einer derartigen elektronischen Steuereinrichtung mit nicht lenkbaren Antriebsrädern zu einem Fahrzeug führt, welches einerseits - etwa verglichen mit einem Fahrzeug mit Spurstangenlenkung - bereits sehr manövrierfähig sein kann und andererseits aufgrund der nicht lenkbaren Antriebsräder - etwa verglichen mit einem allradgelenkten Fahrzeug - unaufwendig herstellbar und einfach zu steuern ausgebildet sein kann.

Bevorzugt ist jedes Lastrad von einer Position, in der seine Achse parallel zur Achse der Antriebsräder verläuft in eine Position lenkbar, in der seine Achse auf einen genau mittig zwischen den Antriebsrädern einer ungelenkte Achse liegenden Lenkpol ausgerichtet ist. Auf diese Weise kann die Manövrierfähigkeit noch weiter gesteigert werden.

Der Lenksollwertgeber kann beispielsweise als Lenkrad oder als Joystick ausgebildet sein.

Die Lasträder einer gelenkten Achse sind bevorzugt zueinander beabstandet ausgebildet, es handelt sich daher vorzugweise nicht etwa um Zwillingsräder. Gleiches gilt bevorzugt für die Antriebsräder.

Die Beeinflussung der Drehzahl der Antriebsmotoren durch die elektronische Steuereinrichtung kann im Wege einer Steuerung oder einer Regelung geschehen. Wenn dies im Wege einer Regelung geschieht, dann sind bevorzugt Drehzahlsensoren an den Antriebsrädern vorgesehen, die den Istwert der Drehzahl der Antriebsräder erfassen und diese wird mit dem durch den Geschwindigkeitssollwertgeber vorgegebenen Wert verglichen und bei einer Abweichung an diesen angeglichen.

Mit dem Begriff "Lastrad" wird im Rahmen dieser Druckschrift insbesondere jedes nicht angetriebenen Rad bezeichnet.

Vorzugweise ist an jedes Antriebsrad ein eigener Antriebsmotor direkt angeflanscht.

Der Durchmesser der Lasträder ist in einer Ausführungsform kleiner, als der Durchmesser der Antriebsräder. In einer anderen Ausführungsform ist der Durchmesser aller Räder gleichgroß.

Wenn die elektronische Steuereinrichtung so eingerichtet ist, dass sie die Drehrichtungsumkehr selbsttätig bewirkt, dann ergibt sich eine besonders einfache Steuerbarkeit des Fahrzeugs.

In einer Ausführungsform sind die Achsen mindestens zweier Lasträder senkrecht zueinander ausrichtbar. Hierdurch kann das Fahrzeug in eine Parkposition gebracht werden.

In der bevorzugten Ausführungsform sind die Lasträder einer gelenkten Achse nicht mechanisch - etwa mittels einer Spurstange - miteinander verbunden. Bevorzugt ist jedes Lastrad daher unabhängig von einem anderen Lastrad lenkbar.

Bevorzugt ist mindestens ein, bevorzugt jedes Lastrad um einen Lenkwinkel von mehr als 90° lenkbar.

Mindestens ein, bevorzugt jedes Lastrad ist in einer Ausführungsform um einen Lenkwinkel von weniger als 180°, weiter bevorzugt weniger als 135° lenkbar.

In einer anderen Ausführungsform ist mindestens ein, bevorzugt jedes Lastrad um 360° oder endlos lenkbar.

Die Lasträder sind elektrisch gelenkt und es ist für jedes Lastrad ein eigener ein elektrischer Lenkmotor vorgesehen.

Der Abstand der Lasträder zueinander kann kleiner sein, als der Abstand der Antriebsräder zueinander.

In einer Ausführungsform sind die Antriebsräder als Vorderräder und die Lasträder als Hinterräder des Fahrzeugs ausgebildet.

In der bevorzugten Ausführungsform ist das Fahrzeug als Gabelstapler ausgeführt.

Bevorzugt weist das Fahrzeug einen aufrecht stehenden Mast auf, an dem heb-und senkbar eine Gabelanordnung angeordnet ist. Die Antriebsräder sind bevorzugt auf der der Gabelanordnung zugewandten Seite des Fahrzeugs angeordnet und die Lasträder sind bevorzugt auf der der Gabelanordnung abgewandten Seite des Fahrzeugs angeordnet.

Bevorzugt ist die elektronische Steuereinrichtung so eingerichtet, dass sie die Drehzahl der Antriebsmotoren in Abhängigkeit des Abstands des jeweiligen Antriebsrades von dem Drehpol, der sich aus dem Lenkwinkel eines Lastrades ergibt, beeinflusst. Dies erfolgt bevorzugt entsprechend des mathematischen Zusammenhangs zwischen dem Umfang der Kreisbahn, auf der das jeweilige Antriebsrad läuft, und seinem Abstand zum durch den Lenkpol definierten Kreismittelpunkt, also dem Radius dieses Kreises.

In der elektronischen Steuereinrichtung ist bevorzugt die sich nicht verändernde und durch die Fahrzeuggeometrie vorgegebene Lage mindestens eines Lastrades senkrecht zu den Achsen der Antriebsräder und weiter bevorzugt parallel hierzu hinterlegt. Bevorzugt ermittelt die elektronische Steuereinrichtung den jeweiligen Abstand eines Antriebsrades von dem durch den Lenkwinkel vorgegebenen Lenkpol aus dieser hinterlegten Lage und dem Lenkwinkel unter Zuhilfenahme von Winkelfunktionen, etwa dem Tangens.

Eine mögliche Ausgestaltung der Erfindung soll im Folgenden beispielhaft unter Bezugnahme auf die beigefügten Zeichnungen beschrieben werden. Es zeigen:
- Fig. 1: - schematisch - ein zweiachsiges Transportfahrzeug am Beispiel eines Gabelstaplers in einer Seitenansicht;
- Fig. 2: eine Prinzipdarstellung des in Fig. 1 gezeigten Transportfahrzeugs in einer Ansicht von oben bei Geradeausfahrt;
- Fig. 3: die in Fig. 2 gezeigte Darstellung bei Kurvenfahrt;
- Fig. 4: die in Fig. 2 gezeigte Darstellung bei einem zwischen den Antriebsrädern liegenden Drehpol.

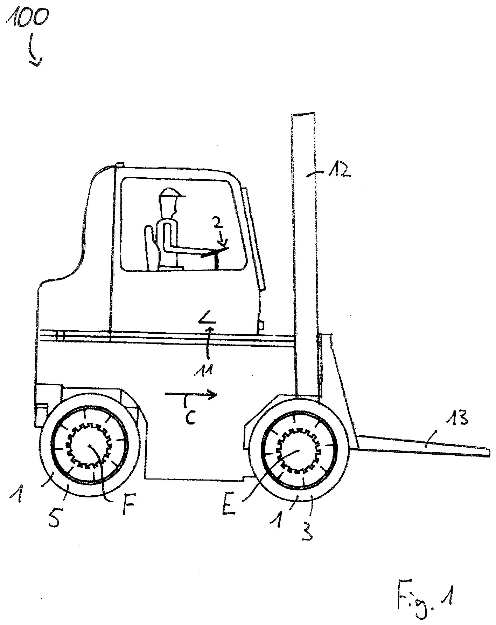

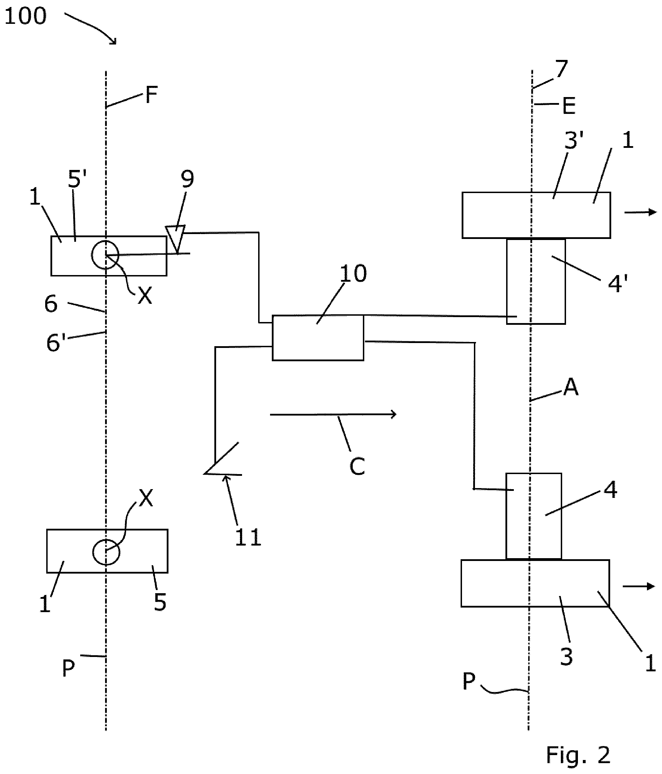

Das in den Zeichnungen gezeigte Ausführungsbeispiel des als Ganzes mit 100 bezeichneten erfindungsgemäßen Transportfahrzeugs ist, wie Fig. 1 zeigt, als zweiachsiger Gabelstapler ausgeführt, mit einem als Lenkrad ausgebildeten Lenksollwertgeber 2. Der Durchmesser der Lasträder 5, 5' ist, wie die Fig. 2 bis 4 zeigen, kleiner, als der Durchmesser der Antriebsräder 3, 3' (in Fig. 1 sind die Lasträder und die Antriebsräder lediglich der Einfachheit halber gleichgroß dargestellt).

Fig. 1 zeigt, dass das Fahrzeug einen aufrecht stehenden Mast 12 aufweist, an dem heb- und senkbar eine Gabelanordnung 13 (in den Figuren 2 bis 4 der Einfachheit halber nicht dargestellt) angeordnet ist.

Die beiden Lasträder 5, 5' sind um Radachsen 6, 6' drehbar und jeweils um eine in den Figuren 2 bis 4 senkrecht zur Zeichenebene verlaufende Lenkachse X lenkbar angeordnet.

Der in Fig. 1 und 2 gezeigte Geschwindigkeitssollwertgeber 11 ist als "Gaspedal" ausgeführt und gibt den Sollwert für die Antriebsleistung der Antriebsmotoren 4, 4' vor.

Der Abstand der Lasträder 5, 5' zueinander ist im gezeigten Ausführungsbeispiel kleiner, als der Abstand der Antriebsräder 3, 3' zueinander.

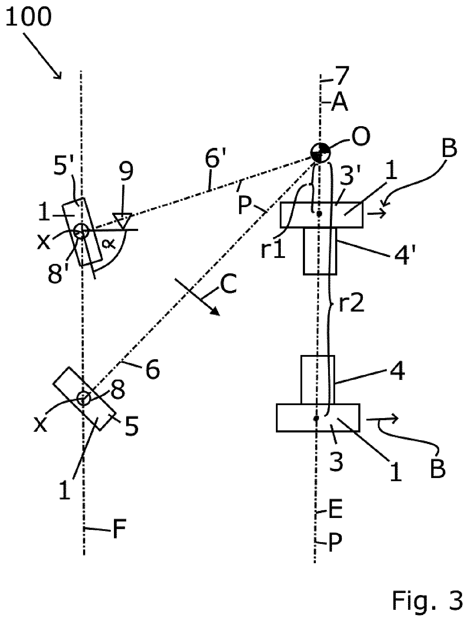

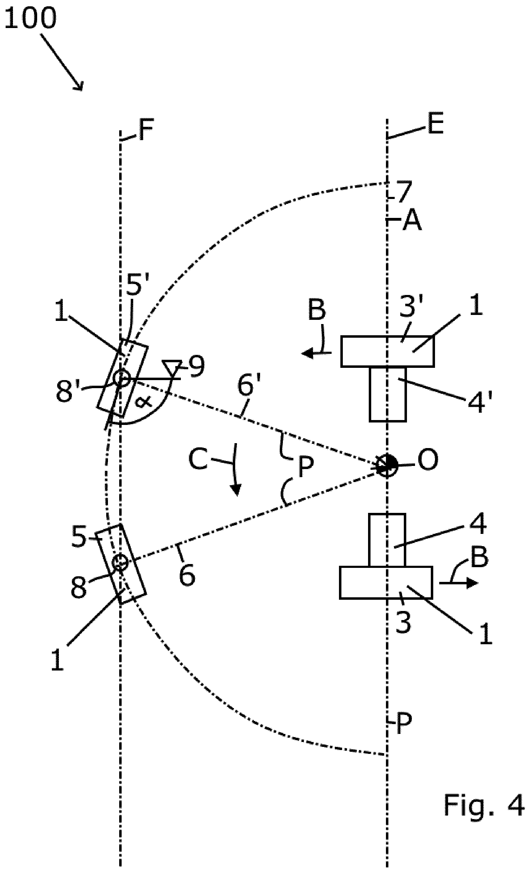

Etwa aus Fig. 2 geht hervor, dass das Fahrzeug vier Räder 1 aufweist. Ein Lenkpol O, auf welchen die Achsen P der Räder 1 bei einer Kurvenfahrt ausgerichtet sind, wird, wie etwa ein Vergleich der Figuren 3 und 4 zeigt, durch Betätigung des Lenksollwertgebers 2 entlang einer Lenkpolachse A verlagert. Der Pfeil C zeigt in allen Figuren die Fahrtrichtung des Fahrzeugs.

Fig. 2 zeigt auch, dass das Fahrzeug eine ungelenkte Fahrzeugradachse E mit zwei Antriebsrädern 3, 3' aufweist. Jedes dieser Antriebsräder 3, 3' ist ungelenkt und mit einem eigenen elektrischen Antriebsmotor 4, 4' angetrieben.

Das Fahrzeug weist eine gelenkte Fahrzeugradachse F mit zwei lenkbaren Lasträdern 5, 5' auf, von denen jedes nicht angetrieben ist.

Wie ein Vergleich der Figuren 2, 3 und 4 zeigt, ist jedes der Lasträder 5, 5' mit dem Lenksollwertgeber 2 von einer Position, in der seine Achse 6, 6' parallel zur Achse 7 der Antriebsräder 3, 3' verläuft (gezeigt in Fig. 2) in eine Position lenkbar, in der seine Achse 6, 6' auf einen zwischen den Antriebsrädern 3, 3' liegenden Lenkpol (O) ausgerichtet ist (gezeigt in Fig. 4).

In Fig. 2 ist auch zu erkennen, dass eine Vorrichtung 9 (als Dreieck symbolisiert) zur Erfassung des Lenkwinkels α von einem Lastrad 5' vorgesehen ist. In dem in den Figuren gezeigten Ausführungsbeispiel ist lediglich an genau einem Lastrad 5' eine Vorrichtung 9 zur Erfassung des Lenkwinkels α dieses Lastrades 5' vorgesehen. Diese Vorrichtung 9 erfasst den Lenkwinkel α ausgehend von der Nullstellung, die in Fig. 2 gezeigt ist, in beide möglichen Lenkrichtungen. Für die Bestimmung der Lage des Drehpols O ist die Erfassung genau eines Lenkwinkels α ausreichend. Es kann jedoch auch an dem anderen Lastrad 5 eine Vorrichtung zur Erfassung des Lenkwinkels dieses Lastrades vorgesehen sein.

An jedes Antriebsrad 3, 3' ist ein eigener Antriebsmotor 4, 4' direkt angeflanscht.

Fig. 2 zeigt eine (für den Figuren 3 und 4 der Einfachheit halber nicht dargestellte) elektronische Steuereinrichtung 10. Diese elektronische Steuereinrichtung weist Eingänge auf, die mit der Vorrichtung zu Lenkwinkelerfassung 9 und dem Geschwindigkeitssollwertgeber 11 wirkverbunden sind und Ausgänge, die mit den beiden Antriebsmotoren 4, 4' wirkverbunden sind. Sie ist so eingerichtet, dass sie die Drehzahl der Antriebsmotoren 4, 4' in Abhängigkeit des mit der Vorrichtung 9 erfassten Lenkwinkels α beeinflusst und die Drehrichtung von jeweils einem der beiden Antriebsmotoren 4, 4' in Abhängigkeit des Lenkwinkels α umkehrt. Dies geschieht derart, dass bei einer Kurvenfahrt, wie etwa in Fig. 3 gezeigt, das kurveninnere Antriebsrad 3' langsamer angetrieben wird, als das kurvenäußere Antriebsrad 3, wie dies durch die beiden unterschiedlich langen Pfeile B in Fig. 3 dargestellt ist. Erkennt die elektronische Steuervorrichtung 10 anhand des erfassten Lenkwinkels α, dass der Drehpol O die Position eines Antriebsrades 3' erreicht und überschritten hat (wie dies zwischen den Figuren 3 und 4 geschehen ist), dann kehrt sie die Drehrichtung dieses Rades 3' selbsttätig um, wie durch die in unterschiedliche Richtungen weisenden Pfeile B in Fig. 4 gezeigt ist.

Die elektronische Steuereinrichtung 10 ist so eingerichtet, dass sie die Drehzahl der Antriebsmotoren in Abhängigkeit des durch den Lenkwinkel α bestimmten Abstands r1, r2 des jeweiligen Antriebsrades 3, 3' von dem Drehpol O beeinflusst, entsprechend des mathematischen Zusammenhangs des Umfangs der Kreisbahn, auf der das jeweilige Antriebsrad 3, 3' läuft und seinem Abstand r1, r2 zum durch den Lenkpol O definierten Kreismittelpunkt, also dem Radius dieses Kreises.

Fig. 4 zeigt die Situation, in der die Achsen 6, 6' der Lasträder 5, 5' auf einen genau mittig zwischen den Antriebsrädern 3, 3' liegenden Lenkpol O ausgerichtet ist.

Wie etwa Fig. 4 zeigt, ist jedes Lastrad 5, 5' um einen Lenkwinkel α von mehr als 90° lenkbar. Jedes Lastrad kann endlos lenkbar sein.

Im gezeigten Ausführungsbeispiel sind die Lasträder 5, 5' elektrisch, mittels eines elektrischen Lenkmotors 8, 8' gelenkt.

### Bezugszeichenliste:

- 100: Transportfahrzeug
- 1: Räder
- 2: Lenksollwertgeber
- 3, 3': Antriebsräder
- 4, 4': elektrischer Antriebsmotor
- 5, 5': Lasträder
- 6, 6': Achsen der Lasträder
- 7: Achse der Antriebsräder
- 8, 8': Lenkmotor
- 9: Vorrichtung zur Erfassung des Lenkwinkels
- 10: elektronische Steuereinrichtung
- 11: Geschwindigkeitssollwertgeber
- 12: Mast
- 13: Gabelanordnung

- A: Lenkpolachse
- B: Pfeile
- C: Pfeil
- E: ungelenkte Achse
- F: gelenkte Achse
- O: Lenkpol
- P: Radachsen
- X: Lenkachsen
- α: Lenkwinkel

## Patentansprüche

1. Transportfahrzeug (100) mit mindestens vier Rädern (1) und einem Lenksollwertgeber (2), wobei ein Lenkpol (O) durch Betätigung des Lenksollwertgebers (2) entlang einer Lenkpolachse (A) verlagert wird,
mit mindestens einer ungelenkten Achse (E) mit zwei Antriebsrädern (3, 3'), von denen jedes ungelenkt und mit einem eigenen elektrischen Antriebsmotor (4, 4') angetrieben ist,
und mit mindestens einer gelenkten Achse (F) mit mindestens zwei nicht angetriebenen, lenkbaren Lasträdern (5, 5'), von denen jedes unter Zuhilfenahme des Lenksollwertgebers (2) von einer Position, in der seine Achse (6, 6') parallel zu einer Achse (7) der Antriebsräder (3, 3') verläuft in eine Position lenkbar ist, in der seine Achse (6, 6') auf einen zwischen den Antriebsrädern (3, 3') liegenden Lenkpol (O) ausgerichtet ist, wobei jedes lenkbare Lastrad (5, 5') einen eigenen elektrischen Lenkmotor (8, 8') aufweist,
und mit einer Vorrichtung (9) zur Erfassung des Lenkwinkels (α) von mindestens einem Lastrad (5, 5'),
wobei eine elektronische Steuereinrichtung (10) vorgesehen ist, die so eingerichtet ist, dass sie die Drehzahl der Antriebsmotoren (4, 4') in Abhängigkeit des Lenkwinkels (α) beeinflusst und die Drehrichtung von mindestens einem der Antriebsmotoren (4, 4') in Abhängigkeit des Lenkwinkels (α) umkehrt,
und die elektronische Steuereinrichtung (10) so eingerichtet ist, dass sie die Drehrichtungsumkehr selbsttätig bewirkt und die Drehrichtung eines der Antriebsmotoren (4, 4') umkehrt, wenn der Lenkpol (O) das Antriebsrad (3, 3'), welches dieser Antriebsmotor (4, 4') antreibt, entlang der Lenkpolachse (A) passiert.

2. Transportfahrzeug nach Anspruch 1, **dadurch gekennzeichnet, dass** die Lasträder (5, 5') nicht mit einer Spurstange miteinander verbunden sind und jedes Lastrad (5, 5') unabhängig von einem anderen Lastrad (5, 5') lenkbar ist.

3. Transportfahrzeug nach Anspruch 1 oder 2, **dadurch gekennzeichnet, dass** an jedes Antriebsrad (3, 3') ein eigener Antriebsmotor (4, 4') direkt angeflanscht ist.

4. Transportfahrzeug nach einem der Ansprüche 1 bis 3, **dadurch gekennzeichnet, dass** die Achsen (6, 6') mindestens zweier Lasträder (5, 5') senkrecht zueinander ausrichtbar sind.

5. Transportfahrzeug nach einem der Ansprüche 1 bis 4, **dadurch gekennzeichnet, dass** jedes Lastrad (5, 5') um mehr als 90° lenkbar ist.

6. Transportfahrzeug nach Anspruch 5, **dadurch gekennzeichnet, dass** jedes Lastrad (5, 5') um 360° oder endlos lenkbar ist.

## Claims

1. Transport vehicle (100) with at least four wheels (1) and a steering setpoint value transducer (2), wherein a steering pole (O) is displaced by actuation of the steering setpoint value transducer (2) along a steering pole axis (A),
with at least one non-steered axle (E) having two drive wheels (3, 3'), each of which is non-steered and driven by its own electric drive motor (4, 4'),
and with at least one steered axle (F) having at least two non-driven steerable load wheels (5, 5'), each of which can be steered with the aid of the steering setpoint value transducer (2) from a position, in which its axis (6, 6') is parallel to an axis (7) of the drive wheels (3, 3'), into a position, in which its axis (6, 6') is aligned with a steering pole (O) lying between the drive wheels (3, 3'), wherein each steerable load wheel (5, 5') has its own electric steering motor (8, 8'),
and with an apparatus (9) for detecting the steering angle (α) of at least one load wheel (5, 5'),
wherein an electronic control device (10) is provided which is designed such that it influences the speed of the drive motors (4, 4') as a function of the steering angle (α) and reverses the direction of rotation of at least one of the drive motors (4, 4') as a function of the steering angle (α),
and the electronic control device (10) is designed so as to automatically reverse the direction of rotation and reverse the direction of rotation of one of the drive motors (4, 4') when the steering pole (O) passes the drive wheel (3, 3'), which this drive motor (4, 4') drives, along the steering pole axis (A).

2. Transport vehicle according to Claim 1, **characterized in that** the load wheels (5, 5') are not connected to each other by way of a track rod, and each load wheel (5, 5') is steerable independently of another load wheel (5, 5').

3. Transport vehicle according to Claim 1 or 2, **characterized in that** a dedicated drive motor (4, 4') is directly flange-connected to each drive wheel (3, 3').

4. Transport vehicle according to one of Claims 1 to 3, **characterized in that** the axes (6, 6') of at least two load wheels (5, 5') can be aligned perpendicularly with respect to each other.

5. Transport vehicle according to one of Claims 1 to 4, **characterized in that** each load wheel (5, 5') is steerable by more than 90°.

6. Transport vehicle according to Claim 5, **characterized in that** each load wheel (5, 5') is steerable by 360° or endlessly.

## Revendications

1. Véhicule de transport (100) comprenant au moins quatre roues (1) et un générateur (2) de valeur de consigne de direction, un pôle de direction (O) étant déplacé le long d'un axe (A) de pôle de direction par l'actionnement du générateur (2) de valeur de consigne de direction,
comprenant au moins un essieu non-directeur (E) avec deux roues motrices (3, 3') dont chacune est non-directrice et entraînée par son propre moteur électrique (4, 4'), et comprenant au moins un essieu directeur (F) avec au moins deux roues porteuses (5, 5') non-entraînées et orientables, chacune d'entre elles étant orientable au moyen du générateur (2) de valeur de consigne de direction, depuis une position, dans laquelle son axe (6, 6') est parallèle à un axe (7) des roues motrices (3, 3'), vers une position dans laquelle son axe (6, 6') est aligné sur un pôle de direction (O) situé entre les roues motrices (3, 3'), chaque roue porteuse orientable (5, 5') comprenant son propre moteur électrique de direction (8, 8'),
et comprenant un dispositif (9) pour détecter l'angle de braquage (α) d'au moins une roue porteuse (5, 5'),
un dispositif de commande électronique (10) étant prévu, qui est agencé de manière à influencer la vitesse de rotation des moteurs d'entraînement (4, 4') en fonction de l'angle de braquage (α) et à inverser le sens de rotation d'au moins un des moteurs d'entraînement (4, 4') en fonction de l'angle de braquage (α),
et le dispositif de commande électronique (10) étant agencé de manière à provoquer automatiquement l'inversion du sens de rotation et à inverser le sens de rotation de l'un des moteurs d'entraînement (4, 4') lorsque le pôle de direction (O) passe le long de l'axe du pôle de direction (A) de la roue motrice (3, 3') entraînée par ce moteur d'entraînement (4, 4').

2. Véhicule de transport selon la revendication 1, **caractérisé en ce que** les roues porteuses (5, 5') ne sont pas reliées entre elles par une barre de liaison et **en ce que** chaque roue porteuse (5, 5') est apte à être dirigée indépendamment d'une autre roue porteuse (5, 5').

3. Véhicule de transport selon la revendication 1 ou la revendication 2, **caractérisé en ce qu'**un moteur d'entraînement (4, 4') propre est directement fixé par bride sur chaque roue motrice (3, 3').

4. Véhicule de transport selon l'une des revendications 1 à 3, **caractérisé en ce que** les essieux (6, 6') d'au moins deux roues porteuses (5, 5') sont orientables perpendiculairement l'un par rapport à l'autre.

5. Véhicule de transport selon l'une des revendications 1 à 4, **caractérisé en ce que** chaque roue porteuse (5, 5') est orientable sur plus de 90°.

6. Véhicule de transport selon la revendication 5, **caractérisé en ce que** chaque roue porteuse (5, 5') est orientable sur 360° ou à l'infini.
